(19) Europäisches Patentamt
European Patent Office
Office européen des brevets

(11) **EP 2 716 698 A1**

(12) **EUROPEAN PATENT APPLICATION**
published in accordance with Art. 153(4) EPC

(43) Date of publication:
**09.04.2014 Bulletin 2014/15**

(51) Int Cl.:
*C08J 9/22* *(2006.01)*    *C08G 73/10* *(2006.01)*

(21) Application number: **12793530.2**

(86) International application number:
**PCT/JP2012/063323**

(22) Date of filing: **24.05.2012**

(87) International publication number:
**WO 2012/165294 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2011 JP 2011123017**

(71) Applicant: Ube Industries, Ltd.
**Ube-shi, Yamaguchi 755-8633 (JP)**

(72) Inventor: **AOKI, Fumio**
**Ichihara-shi**
**Chiba 290-0045 (JP)**

(74) Representative: **Grünecker, Kinkeldey,**
**Stockmair & Schwanhäusser**
**Leopoldstrasse 4**
**80802 München (DE)**

(54) **POLYIMIDE POWDER AND POROUS POLYIMIDE BODY USING SAME**

(57)    Provided are a porous polyimide body excellent in heat resistance, manufacturable in a simple process, little in dimensional change in heat treatment, and excellent in productivity as well as a polyimide powder suitable for manufacture of such a porous polyimide body. The polyimide powder is obtained by pulverizing a foam product of a polyimide precursor. Particularly, the foam product of the polyimide precursor is a product of heating the polyimide precursor for foaming with microwave radiation and has the imidization ratio of 10 to 90%, and is preferably a foam product including a tetracarboxylic acid component, which contains 50 mol% or more of biphenyltetracarboxylic acids and is monoesterified and/or diesterified in parts with a lower aliphatic primary alcohol with the number of carbon atoms of 4 or less, and a diamine component containing 90 mol% or more of an aromatic diamine, and being a monomer salt of which the ratio of the tetracarboxylic acid component and the diamine component is approximately 2:1 and in a solid form dispersed at molecular level.

EP 2 716 698 A1

Printed by Jouve, 75001 PARIS (FR)

## Description

Technical Field

The present invention relates to a polyimide powder obtained by pulverizing a foam product of a polyimide precursor and to a porous polyimide body obtained by compression molding and heat treatment of the same powder.

Background Art

In the past, a polyimide molded article has been manufactured by compressing and heating a powder or foam chips of polyimide which is a raw material. For example, Patent Literature 1 discloses a light weight polyimide molded article with the density of 0.3 to 1.0 g/cm$^3$ obtained by compression molding of polyimide foam chips followed by heat treatment in a mold. Also, Patent Literature 2 discloses a porous aromatic polyimide molded article with good homogeneity having the density of approximately 1.1 to 1.3 g/cm$^3$ which is molded by ram extrusion of aromatic polyimide powders with the average particle diameter of 1 to 40 $\mu$m at temperature of 280°C or more and under pressure of 50 to 1,000 kg/cm$^2$. Further, Patent Literature 3 discloses a polyimide resin molded article with the density of 1.22 g/cm$^3$ or more obtained by compression molding and heat treatment of polyimide resin powders with the specific surface area of 20 m$^2$/g and the imidization ratio below 90%

Citation List

Patent Literature

> Patent Literature 1: JP 2009-242661 A
> Patent Literature 2: JP 62-134241 A
> Patent Literature 3: JP 04-106129 A

Summary of Invention

Technical Problem

However, in manufacture of polyimide molded articles described in Patent Literature 1 not only spring back during compression molding is relatively large but also spring back is likely to occur after heat treatment, causing a problem of making dimensional control of molded articles difficult. Also, in the porous aromatic polyimide molded article with good homogeneity described in Patent Literature 2 polyimide powders with a relatively small particle diameter are used and nothing is disclosed on manufacture of a porous body with low density. Further, in Patent Literature 3 its purpose is to obtain a polyimide resin molded article with high strength and high toughness, and a way to obtain a porous body is not disclosed.

The present invention is performed in view of the above problem and its object is to provide a porous polyimide body excellent in heat resistance, manufacturable in a simple process, little in dimensional change in heat treatment, and excellent in productivity as well as to provide a polyimide powder suitable for manufacture of such a porous polyimide body.

Solution to Problem

The present inventors earnestly investigated the problem and as the results, found that use of a polyimide powder obtained by pulverizing a foam product which is formed by heating of a polyimide precursor for foaming allows manufacture of a porous polyimide body excellent in heat resistance, manufacturable in a simple process, little in dimensional change in heat treatment, and excellent in productivity, leading to the present invention.

That is, the present invention relates to a polyimide powder obtained by pulverizing a foam product of a polyimide precursor. In the polyimide powder according to the present invention, the foam product of the polyimide precursor is preferably obtained by microwave heating of the polyimide precursor for foaming and the imidization ratio is preferably from 10 to 90%.

Also, in the polyimide powder according to the present invention, a foam product of a polyimide precursor is preferably a foam product including a tetracarboxylic acid component, which contains 50 mol% or more of biphenyltetracarboxylic acids, monoesterified and/or is diesterified in parts with a lower aliphatic primary alcohol having the number of carbon atoms of 4 or less, and a diamine component containing 90 mol% or more of an aromatic diamine, and being a monomer salt of which the ratio of the tetracarboxylic acid component and the diamine component is approximately 2:1 and in a solid form dispersed at molecular level, and more preferably the polyimide precursor contains a diaminosiloxane compound in the diamine component.

Also, the present invention relates to a porous polyimide body which can be obtained by compression molding and heat treatment of the polyimide powder.

Advantageous Effects of Invention

As described above, the present invention can provide a porous polyimide body excellent in heat resistance, manufacturable in a simple process, little in dimensional change in heat treatment, and excellent in productivity as well as to provide a polyimide powder suitable for manufacture of such a porous polyimide body.

Description of Embodiments

A polyimide powder of the present invention can be obtained by heating the polyimide precursor to yield a foam product thereof and pulverizing the foam product of the polyimide precursor.

Firstly, in yielding the foam product of the polyimide precursor by heating the polyimide precursor, the polyimide precursor is preferably used, which includes a tetracarboxylic acid component mainly containing aromatic tetracarboxylic acids and a diamine component mainly containing aromatic diamines, and provides an aromatic polyimide with the glass transition temperature of 250°C or more, preferably 300°C or more, more preferably 330°C or more, particularly preferably 350°C or more after completing imidization.

Any aromatic polyimide may be herein used so far as it is practically an aromatic polyimide, and for example, a small amount of components other than aromatic tetracarboxylic acids and aromatic diamines may be contained in the tetracarboxylic acid component and the diamine component in order to improve the plasticity in molding of a foam article. It is important to keep the glass transition temperature of a polyimide obtained above the above value. When a small amount of the other components are used, their amounts are each independently in a range of 10 mol% or less, preferably 5 mol% or less, more preferably 2 mol% or less in the tetracarboxylic acid component and the diamine component.

A tetracarboxylic acid component used includes aromatic tetracarboxylic acids including biphenyltetracarboxylic acids such as 2,3,3',4'-biphenyltetracarboxylic acid, 3,3',4,4'-biphenyltetracarboxylic acid, and 2,2',3,3'-biphenyltetracarboxylic acid; pyromellitic acids; benzophenonetetracarboxylic acids such as 3,3',4,4'-benzophenonetetracarboxylic acid; naphthalenetetracarboxylic acids such as 2,3,6,7-naphthanlenetetracarboxylic acid, 1,2,5,6-naphthanlenetetracarboxylic acid, 1,2,4,5-naphthanlenetetracarboxylic acid, and 1,4,5,8-naphthanlenetetracarboxylic acid; bis(dicarboxylphenyl) ethers such as bis(3,4-dicarboxylphneyl) ether, bis(dicarboxylphenyl)propanes such as 2,2-bis(2,5-dicarboxylphenyl)propane; bis(dicarboxylphenyl)ethanes such as 1,1-bis(2,3-dicarboxylphenyl)ethane; and bis(dicarboxylphenyl)sulfone such as 1,1-bis(3,4-dicarboxyphenyl)sulfone. Such aromatic tetracarboxylic acids can be suitably used alone or as a mixture. Among them, since biphenyltetracarboxylic acids can easily produce a foam body and the glass transition temperature of the polyimide formed is high, these acids are suitable for use as a major component of the tetracarboxylic acid component (50 mol% or more, preferably 80 mol% or more).

The tetracarboxylic acids herein mean tetracarboxylic acids and their derivatives such as tetracarboxylic acids, esters thereof, and anhydrides thereof which can form a polyimide.

Minor components added to the tetracarboxylic acid component in consideration of the moldability include bis(dicarboxylphenyl)tetramethyldisiloxanes such as 1,3-bis(3,4-dicarboxylphenyl)-1,1,3,3-tetramethyldiloxane; and aliphatic tetracarboxylic acids including cyclopentanetetracarboxylic acids and cyclohexanetetracarboxylic acids such as 1,2,4,5-cyclohexanetetracarboxylic acid and 3-mehtyl-4-cyclohexen-1,2,4,5-tetracarboxylic acid.

Diamine components used include aromatic diamines having one benzene ring such as p-phenylenediamine, m-phenylenediamine, 2,4-diaminotoluene, 2,6-diaminotoluene, and 3,5-diaminobenzoic acid; aromatic diamines having two benzene rings such as 4,4'-diaminodiphenyl ether, 3,4'-diaminodiphenyl ether, 4,4'-diaminodiphenylmethane, and 4,4'-diaminodiphenylsulfone; aromatic diamines having three benzene rings such as 1,3-bis(3-aminophenoxy)benzene and 1,3-bis(4-aminophenoxy)benzene; aromatic diamines having four benzene rings such as bis(4-(4-aminophenoxy)phenyl)sulfone, bis(4-(3-aminophenoxy)phenyl)sulfone, 4,4'-bis(3-aminophenoxy)biphenyl, 4,4'-bis(4-aminophenoxy)biphenyl, and 2,2'-bis(4-(4-aminophenoxy)phenyl)propane; aromatic amines having a naphthalene ring such as diaminonaphthalene; and aromatic diamines having a heterocyclic ring such as 2,6-diaminopyridine. These aromatic amines can be suitably used alone or as a mixture. Among them, at least one aromatic diamine selected from the group consisting of p-phenylenediamine, m-phenylenediamine, 4,4'-diaminodiphenyl ether, 3,4'-diaminodiphenyl ether, 4,4'-diaminodiphenylmethane, 4,4'-diaminodiphenylsulfone, and 2,6-diaminopyridine is suitably used as a major component (50 mol% or more, preferably 90 mol% or more).

Components in a small amount added to a diamine component in consideration of the moldability include diamonosiloxanes such as 1,3-bis(3-aminopyropyl)tetramethyldisiloxane; alicyclic diamines such as isophoronediamine, norbornanediamine, 1,2-diaminocyclohexane, 1,3-diaminocyclohexane, 1,4-diaminocyclohexane, and bis(4-aminocyclohexyl)methane; and aliphatic diamines such as hexamethylenediamine and diaminododecane. Particularly, diaminosiloxane is suitably used in a range of 0.1 to 10 mol% for uniform foaming.

Furthermore, as minor component added to the diamine component an imidization catalyst such as 1,2-dimethylimidazole, benzoimidazole, isoquinoline, and substituted pyridines; surfactants; or other publicly known additives, for example, inorganic fillers and inorganic or organic pigments may be added.

A polyimide precursor can be suitably prepared according to publicly known conventional method. For example, a tetracarboxylic acid dianhydride is reacted with the lower aliphatic primary alcohol in a solvent of a lower aliphatic primary alcohol with the number of carbon atoms of 4 or less such as methanol, ethanol, n-propanol, and n-butanol to prepare a solution of an esterified tetracarboxylic acid. Next, a diamine is added to the solution to mix so as to adjust the mixing ratio of the tetracarboxylic acid component to the diamine component to approximately 2:1 forming a polyimide precursor solution, followed by evaporating the solvent at low temperature to remove it, thus obtaining the polyimide precursor.

Herein the solvent is suitably removed by a method using a spray dryer and the like, in which the polyimide precursor can be obtained in a form of powders with uniform shape. At this time the temperature is preferably 100°C or less, particularly preferably 80°C or less. Evaporation to dryness at high temperature extremely reduces the foamability of the polyimide precursor. Evaporation to dryness may be performed under normal pressure or under increased pressure or under reduced pressure.

The polyimide precursor thus obtained can be converted by heating to a foam product of the polyimide precursor. A heating method herein is not limited, but uniform heating with microwave radiation is preferred for uniform foaming. Non-uniform foaming is not desired since the shape of polyimide powder obtained by pulverizing the foam product is not uniform. In this case, microwave radiation is generally performed at 2.45 GHz according to the domestic regulation (Radio Act).

Microwave heating initiates foaming of the polyimide precursor as well as advances its imidization. In the present invention, the foam product of the polyimide precursor obtained is a foam product in which imidization does not proceed to completion, and specifically, the imidization ratio is preferably from 10 to 90%, more preferably from 20 to 80%, most preferably from 30 to 70%. When the imidization ratio is too high, it is not preferred because not only pulverization of the foam product takes excessively long hours but also spring back in compression molding is large. On one hand, when the imidization ratio is too low, it is not preferred because foaming occurs in heat treatment after compression molding. The expansion ratio of the foam product and its imidization ratio can be controlled also by the output of microwave power and the heating time, and the output of microwave power per unit weight of the polyimide precursor can be used as a guide.

In the present invention, a particularly preferable foam product of a polyimide precursor comprises, for example, an aromatic tetracarboxylic acid component, which contains 50 mol% or more of biphenyltetracarboxylic acids, and is monoesterified and/or diesterified in parts with a lower aliphatic primary alcohol with the number of carbon atoms of 4 or less, and a diamine component containing 90 mol% or more of an aromatic diamine. The foam product is a monomer salt of which the ratio of the tetracarboxylic acid component and the diamine component is approximately 2:1 and in a solid form dispersed at molecular level.

Next, the foam product of the polyimide precursor is pulverized to obtain a polyimide powder according to the present invention. The foam product of the polyimide precursor meeting the above condition is very brittle since imidization does not proceed to completion, and can be easily converted to the polyimide powder of the present invention by a publicly known method, for example, by pulverization using a particle disintegrator for resin molded articles. The shape of the polyimide powder according to the present invention is not particularly limited, and can be used so far as the shape allows for conveying powder particles to a given mold. The powder size can be appropriately adjusted in consideration of the density of a porous body targeted and its pore diameter, and in general preferably adjusted to a range of the maximum diameter of 0.1 to 5 mm from the point of view of handling.

A porous polyimide body of the present invention can be obtained by compression molding and heat treatment of the polyimide powder obtained as described above. In the present invention, the process of compression molding and heat treatment may be performed in one step, but a multi-step method including a process of filling the mold with a given amount of the polyimide powder followed by compression molding at the temperature of 100°C or less to yield a preliminary molded article and a next process of heating the preliminary molded article at the temperature of 250 to 500°C is preferred since the porous polyimide body can be manufactured efficiently and consistently in quality.

The mold used in compression molding is not particularly limited so far as a given amount of polyimide powder can be compression-molded. The mold shape is preferably matched to the shape of a final product (when a final product is manufactured by a combination of a plurality of compression molded articles, the mold shape reflects a partial shape of each subpart). For example, when a plate-like product is to be manufactured, a box-shaped mold with a matching inner lid (punch die) for compressing the polyimide powder can be preferably used in combination with a single-screw hydraulic injection molding machine. In addition, selection of the mold for fabricating the shapes of sheet, plate, half-split pipe, column, cube, and box allows molding of the polyimide powder in any shape.

Heat treatment of a preliminary molded article is preferably performed using an oven or the like. Heating may be performed within a mold or after taking the preliminary molded article out of the mold. The polyimide powder of the present invention, little changes the dimension even in heat treatment after preliminary molding and the preliminary molded article is not always required to be heated within a mold, resulting in excellent productivity. Heat treatment is preferably performed by gradually elevating the temperature from 200°C (as a rough guide, the rate of the temperature elevation is in a range of 100°C/10 min.). Eventually the polyimide powder is heated at the temperature of the glass transition temperature of the polyimide obtained plus $\alpha$ (in a range of 10 to 100°C) for 5 to 60 minutes, preferably for about 10 minutes.

The porous polyimide body obtained as described above has the imidization ratio of 100%, and its density is preferably from 0.5 to 1.2 g/cm$^3$, more preferably from 0.6 to 1.1 g/cm$^3$.

Examples

In present examples each measurement was performed as follows.

(1) Measurement of thickness of molded articles

Thicknesses of the preliminary molded article and the molded article were measured at the center and at four other locations for determining the average as thickness.

(2) Measurement of densities of preliminary molded articles and molded articles.

The volume and the weight of the preliminary molded article and the molded article were measured to calculate the density using the following formula.

[Mathematical Formula 1]

$$\text{Density (g/cm}^3) = \text{Weight of preliminary molded article or molded article/Volume of preliminary molded article or molded article}$$

(3) Imidization ratio

Using an infrared absorption spectrometer, absorbance at 1775 cm$^{-1}$ due to absorption of the carbonyl group of imide ring and absorbance at 1512 cm$^{-1}$ due to absorption of the aromatic ring are measured to calculate the absorbance ratio using the following formula (I) and then calculate the imidization ratio of each sample using the following formula (II). The imidization ratio of the polyimide herein is 100% when the polyimide precursor is heat-treated at 120°C for 1 hour, at 250°C for 1 hour, and at 400°C for 1 hour by exposing to microwave radiation.

[Mathematical Formula 2]

$$\text{Absorbance ratio} = \text{Absorbance at 1775 cm}^{-1}/\text{Absorbance at 1512 cm}^{-1} \quad (I)$$

[Mathematical Formula 3]

$$\text{Imidization ratio (\%) = (Absorbance ratio of a sample/Absorbance ratio in case of 100\% imidization ratio)} \times 100 \quad \text{(II)}$$

Example 1

55.519 kg of 2,3,3',4'-biphenyltetracarboxylic acid dianhydride, 15.201 kg of 3,3',4,4'-benzophenonetetracarboxylic acid dianhydride, and 139.7 kg of methanol were charged into a 1 $m^3$ jacketed reaction vessel with a stirring equipment, in which the atmosphere was displaced with nitrogen followed by circulating warm water at 90°C through the jacket to raise to 90°C the temperature of the reaction mixture which was refluxed for 90 minutes at this temperature for esterification. Thereafter, the reaction mixture was cooled to 30°C or less, to which 25.052 kg of p-phenylenediamine and 0.628 kg of 1,3-bis(3-aminopropyl)tetramethylsiloxane were then added. Further, 2.892 kg of 1,2-dimethylimidazole was added to the reaction mixture, which was stirred to form a homogeneous solution. Next, using a spray dryer, the reaction mixture was dried while adjusting the drying air flow rate to keep the drying temperature at 50°C or less, yielding a polyimide precursor powder.

Next, a mold with a dimension of 300 mm in diameter and 200 mm in thickness was filled with 2 kg of the polyimide precursor powder, which was pressed to mold using a compression molding machine. The molded article obtained has a dimension of 300 mm in diameter and 15 mm in thickness. The molded article was placed in a microwave radiation equipment and exposed to microwave radiation at a power output of 5 kw for 10 minutes to form a foam product of the polyimide precursor, which was pulverized by hand to pass through a 2 mm mesh sieve yielding a polyimide powder. The imidization ratio of the polyimide powder was 50%.

Example 2

2 g of the polyimide powder were placed in a donut shape mold made of stainless steel with the inside diameter of 49.6 mm and the height of 20 mm equipped with a bottom plate made of stainless steel with the outside diameter of 49.1 mm and the thickness of 5 mm, on which a punch die made of stainless steel with the outside diameter of 49.1 mm and the height of 20 mm was further placed, and then a set of the mold was placed at ambient temperature in a compression molding machine NF-50 (manufactured by SHINTO Metal Industries Corporation) for molding in which pressure was applied at 12.7 MPa for 1 minute to yield a preliminary molded article with the thickness of 1.56 mm and the density of 0.66 $g/cm^3$.

And the preliminary molded article was taken out of the mold and kept at 120°C for 1 hour without applying any pressure followed by elevating the temperature to 400°C, at which the preliminary molded article was heat-treated for 10 minutes to yield a molded article. The molded article has the thickness of 1.53 mm and the density of 0.67 $g/cm^3$.

Example 3

A preliminary molded article was prepared similarly to Example 2 except the pressure used in preliminary molding was 25.4 MPa. The preliminary molded article has the thickness of 1.42 mm and the density of 0.73 $g/cm^3$. Also, the preliminary molded article was taken out of the mold and kept at 120°C for 1 hour without applying any pressure followed by elevating the temperature to 400°C, at which the preliminary molded article was heat-treated for 10 minutes to yield a molded article with the thickness of 1.41 mm and the density of 0.85 $g/cm^3$.

Example 4

A preliminary molded article was prepared similarly to Example 2 except the pressure used in preliminary molding was 63.5 MPa. The preliminary molded article has the thickness of 1.05 mm and the density of 0.99 $g/cm^3$. Also, the preliminary molded article was taken out of the mold and kept at 120°C for 1 hour without applying any pressure followed by elevating the temperature to 400°C, at which the preliminary molded article was heat-treated for 10 minutes to yield a molded article with the thickness of 1.04 mm and the density of 1.05 $g/cm^3$.

Comparative Example 1

4 g of the polyimide precursor powder before foaming used in Example 1 were placed in a container made of stainless steel and heat-treated at 120°C for 1 hour, at 250°C for 1 hour, and at 400°C for 1 hour to form a polyimide powder (imidization ratio: 100%). And 2 g of the polyimide powder was preliminarily molded at pressure of 317.5 MPa similarly to Example 2. The preliminary molded article has the thickness of 1.09 mm and the density of 0.90 g/cm$^3$. Also, the preliminary molded article was taken out of the mold and kept at 120°C for 1 hour without applying any pressure followed by elevating the temperature to 400°C, at which the preliminary molded article was heat-treated for 10 minutes to yield a molded article with the thickness of 2.22 mm and the density of 0.40 g/cm$^3$. Therefore, it was found that preliminary molding of the polyimide powder after completing imidization (imidization ratio: 100%) and heat treatment resulted in expansion of a whole product during heat treatment.

2 g of the polyimide precursor powder (imidization ratio: 0%) before foaming used in Example 1 were used for preliminary molding at pressure of 12.7 MPa similarly to Example 2. The preliminary molded article has the thickness of 1.46 mm and the density of 0.71 g/cm$^3$. The preliminary molded article was taken out of the mold and kept at 120°C for 1 hour without applying any pressure followed by elevating the temperature to 400°C resulting in partial foaming to expand, and a targeted molded article was not obtained.

**Claims**

1.  A polyimide powder obtained by pulverizing a foam product of a polyimide precursor.

2.  The polyimide powder according to claim 1, wherein the foam product of the polyimide precursor is a foam product obtained by heating the polyimide precursor for foaming with microwave radiation.

3.  The polyimide powder according to claim 1 or 2, which has an imidization ratio of 10 to 90%.

4.  The polyimide powder according to any of claims 1 to 3, wherein the foam product of the polyimide precursor comprises a tetracarboxylic acid component, which contains 50 mol% or more of biphenyltetracarboxylic acids and is monoesterified and/or diesterified in parts with a lower aliphatic primary alcohol with the number of carbon atoms of 4 or less, and a diamine component containing 90 mol% or more of an aromatic diamine, and is a monomer salt of which a ratio of the tetracarboxylic acid component and the diamine component is 2:1 and in a solid form dispersed at molecular level.

5.  The polyimide powder according to claim 4, wherein the polyimide precursor contains a diaminosiloxane compound in the diamine component.

6.  A porous polyimide body obtained by compression molding and heat treatment of the polyimide powder according to any one of claims 1 to 5.

## INTERNATIONAL SEARCH REPORT

| | International application No. |
|---|---|
| | PCT/JP2012/063323 |

**A. CLASSIFICATION OF SUBJECT MATTER**
*C08J9/22(2006.01)i, C08G73/10(2006.01)i*

According to International Patent Classification (IPC) or to both national classification and IPC

**B. FIELDS SEARCHED**

Minimum documentation searched (classification system followed by classification symbols)
C08J9/00-9/42, C08G73/00-73/26

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2011/055530 A1 (IST Corp.), | 1-4,6 |
| Y | 12 May 2011 (12.05.2011), paragraphs [0010] to [0014], [0047] to [0058] (Family: none) | 5 |
| X | JP 2004-323715 A (Ube Industries, Ltd.), | 6 |
| Y | 18 November 2004 (18.11.2004), claims; paragraph [0014] & US 2004/0229969 A1 & EP 1471106 A1 | 5 |
| A | JP 2004-256561 A (Showa Aircraft Industry Co., Ltd.), 16 September 2004 (16.09.2004), entire text (Family: none) | 1-6 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 July, 2012 (19.07.12) | 31 July, 2012 (31.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/063323

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-515897 A  (E.I. Du Pont De Nemours & Co.),<br>27 May 2004 (27.05.2004),<br>entire text<br>& US 2002/0094443 A1    & EP 1343836 A1<br>& WO 2002/048243 A1    & CN 1503818 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009242661 A
- JP 62134241 A
- JP 4106129 A